# EUROPÄISCHE PATENTSCHRIFT

(11) **EP 3 948 391 B1**
(45) Veröffentlichungstag und Bekanntmachung des Hinweises auf die Patenterteilung: **01.01.2025**
(21) Anmeldenummer: 20717099.4
(22) Anmeldetag: 24.03.2020
(51) Int. Cl.: G02B 19/00, G02B 27/01

(54) **OPTISCHES ELEMENT UND DECKSCHEIBE MIT OPTISCHEM ELEMENT**
OPTICAL ELEMENT AND COVER PANE WITH AN OPTICAL ELEMENT
ÉLÉMENT OPTIQUE ET PLAQUE DE COUVERTURE MUNIE D'UN ÉLÉMENT OPTIQUE

(30) Priorität: 26.03.2019 DE 102019204132
(43) Veröffentlichungstag der Anmeldung: 09.02.2022
(73) Patentinhaber: Robert Bosch GmbH, 70442 Stuttgart (DE)
(72) Erfinder: GRIMM, Dietmar, 71696 Moeglingen (DE)
(86) Internationale Anmeldenummer: PCT/EP2020/058043
(87) Internationale Veröffentlichungsnummer: WO 2020/193491

(56) Entgegenhaltungen:
- WO-A1-2012/163341
- DE-A1- 102013 108 800
- DE-U1- 202005 009 770
- US-A1- 2012 140 482
- US-A1- 2013 223 081
- US-A1- 2016 076 706

## Beschreibung

Die vorliegende Erfindung betrifft eine Deckscheibeneinheit und ein Fahrerbeobachtungssystem, in die eine solche Deckscheibeneinheit integriert ist.

### Stand der Technik

Es existieren verschiedene Arten von Beleuchtungsoptiken, welche die Totalreflexion von Licht ausnutzen, um eine gleichmäßige Abstrahlung von näherungsweise punktförmig erzeugtem Licht mit einer z.B. halbkugelförmigen Abstrahlcharakteristik in eine bevorzugte Richtung zu ermöglichen. Auf diese Weise können optische Elemente gebildet werden, die auch als TIR-Linsen (total internal reflection) bekannt sind und sich insbesondere als Optiken für Festkörper-Lichtquellen wie Leuchtdioden (light emitting diode, LED) eignen, da diese in grober Näherung punktförmige Lichtquellen sind. Je nach Ausführung kann dabei auch eine teilweise oder vollständige Kollimation der Lichtstrahlen erreicht werden.

Eine gleichmäßige Ausleuchtung ist für viele Beleuchtungsanwendungen erwünscht. Ein konkreter Anwendungsbereich sind Fahrassistenzsysteme, die mit einer Innenraumbeobachtung bzw. Fahrerbeobachtung in einem Kraftfahrzeug einhergehen. Bei solchen Systemen wird der Fahrer mit infrarotem Licht von einer geeigneten Quelle beleuchtet und das reflektierte Licht mit einer entsprechend angebrachten Kamera erfasst. Die Kamerabilder werden ausgewertet, um beispielsweise zu überwachen, ob der Fahrer die Augen geöffnet oder geschlossen hat oder in welche Richtung der Fahrer blickt. Daraus kann das System auf

Müdigkeitszustände, Abgelenktheit und andere Zustände schließen und entsprechende Signale oder weitergehende Eingriffe in das Fahrverhalten einleiten.

Solche Systeme sollen jederzeit eine gute Ausleuchtung des Fahrers erreichen und außerdem unkompliziert und unauffällig ins Fahrzeug integriert werden.

Aus der DE 20 2005 009770 U1 ist eine LED-Beleuchtungsvorrichtung mit einem Linsenkörper bekannt.

Aus der US 2012/140482 A1 ist eine Linse mit einer Lichteintrittsfläche und einer Lichtaustrittsfläche bekannt.

Aus der US 2013/223081 A1 ist eine optische Linse für einen Leuchtdioden ("LED")-Lichtprojektor bekannt.

Aus der DE 10 2013 108800 A1 ist eine Beleuchtungsvorrichtung und Verfahren zum Erzeugen eines Beleuchtungsfeldes bekannt.

### Offenbarung der Erfindung

Erfingungsgemäss wird eine Deckscheibeneinheit gemäss Anspruch 1 vorgeschlagen, die eine Deckscheibe mit einer planaren oder gekrümmten Oberfläche und ein einstückig an der Deckscheibe angeformtes optisches Element umfasst. Eine solche Deckscheibe kombiniert mit einem optischen Element erlaubt einen einfachen und kostengünstigen Einbau des optischen Elements.

Vorteilhafte Ausgestaltungen sind Gegenstand der Unteransprüche sowie der nachfolgenden Beschreibung.

Gemäß einer beispielhaften Ausführungsform kann der Querschnitt des optischen Elements in der Austrittsebene beispielsweise eine Ellipse, ein Rechteck oder ein abgerundetes Rechteck sein. Beispielhafte Ausdehnungs-, insbesondere Seitenverhältnisse, des Querschnitts eines erfindungsgemäßen optischen Elements können zwischen 1,05:1 und 4:1 liegen, bevorzugt zwischen 1,1:1 und 3:1. Mit solchen nicht kreissymmetrischen Querschnitten erhält man einen entsprechenden, ebenfalls länglichen Beleuchtungsbereich.

Optional kann das optische Element aus einem Material gefertigt sein, das im sichtbaren Bereich zumindest teilweise intransparent ist und im infraroten Bereich transparent ist, falls eine infrarote Beleuchtung gewünscht ist. Für Beleuchtungen mit anderen Wellenlängen sind entsprechend andere Materialtransparenzen wählbar.

Das optische Element kann beispielsweise durch Spritzgießen oder Spritzprägen gefertigt sein. Solche Verfahren ermöglichen eine kostengünstige und exakte Herstellung dieser optischen Elemente.

In einer Ausführungsform kann das optische Element ein oder mehrere Einkopplungsbereiche umfassen, die so ausgebildet sind, dass mindestens zwei separate Lichtquellen (z.B. zwei oder mehr LEDs) zur Einkopplung von Licht in das optische Element verwendbar sind. Dabei kann es sich bei dem Einkopplungsbereich beispielsweise um eine entsprechend dimensionierte Ausnehmung in dem optischen Element handeln, in der die Lichtquellen angeordnet sind.

Eine Deckscheibe mit integriertem optischem Element wie oben beschrieben kann beispielsweise eine Abdeckung für einen Abschnitt eines Fahrzeugcockpits bilden, z.B. im Bereich eines Armaturenbretts oder einer Mittelkonsole, oder für ein gesondert angebrachtes Fahrerbeobachtungssystem.

Ebenso wie ein optisches Element alleine kann auch die mit dem optischen Element gemeinsam ausgebildete Deckscheibe durch Spritzgießen oder Spritzprägen gefertigt sein.

Es wird außerdem ein Fahrerbeobachtungssystem vorgeschlagen, das folgende Komponenten umfasst: eine solche Deckscheibeneinheit, mindestens eine Lichtquelle, die Infrarotlicht in das optische Element der Deckscheibeneinheit einstrahlt, und eine Kamera die Infrarotlicht, das aus einem von dem optischen Element beleuchteten Bereich reflektiert und/oder gestreut wird, erfasst. Das Fahrerbeobachtungssystem ist dabei bevorzugt in einem Fahrzeugcockpit, z.B. in einem PKW oder LKW angeordnet, und dient zur Überwachung bestimmter Fahrereigenschaften. Dabei kann bei einem solchen System die Kamera wie das Beleuchtungselement ebenfalls hinter der Deckscheibe der Deckscheibeneinheit angeordnet sein.

Weitere Vorteile und Ausgestaltungen der Erfindung ergeben sich aus der Beschreibung und der beiliegenden Zeichnung.

Die Erfindung ist anhand von Ausführungsbeispielen in der Zeichnung schematisch dargestellt und wird im Folgenden unter Bezugnahme auf die Zeichnung beschrieben.

### Kurze Beschreibung der Zeichnungen

Figur 1 zeigt ein optisches Element mit Totalreflexion, das nicht Gegenstand der Erfindung ist;
Figur 2 zeigt drei beispielhafte erfindungsgemäße Querschnitte eines optischen Elements in der Austrittsebene;
Figur 3 zeigt Querschnitte beispielhafter optischer Elemente gemäß der Erfindung, wobei Figur 3a einen Querschnitt eines ersten Elements in der X-Z-Ebene mit simuliertem Strahlverlauf zeigt, Figur 3b einen Querschnitt des ersten Elements in der Y-Z-Ebene mit simuliertem Strahlverlauf zeigt, und Figur 3c eine Draufsicht in X-Y-Ebene eines zweiten Elements zeigt;
Figur 4 zeigt dreidimensionale schematische Ansichten von beispielhaften optischen Elementen, die gemäß der Erfindung an eine Deckscheibe angeformt sind, wobei Figur 4a das erste Element aus den Figuren 3a und b zeigt, und Figur 4b das zweite Element aus Figur 3c zeigt;
Figur 5a skizziert die Anordnung eines optischen Elements mit einer Deckscheibe in einem Fahrzeugcockpit gemäß der Erfindung;
Figur 5b zeigt eine vergrößerte Ansicht des optischen Elements mit Kamera und Deckscheibe; und
Figur 5c zeigt eine detaillierte Draufsicht auf die Elemente aus Figur 5b.

### Ausführungsformen der Erfindung

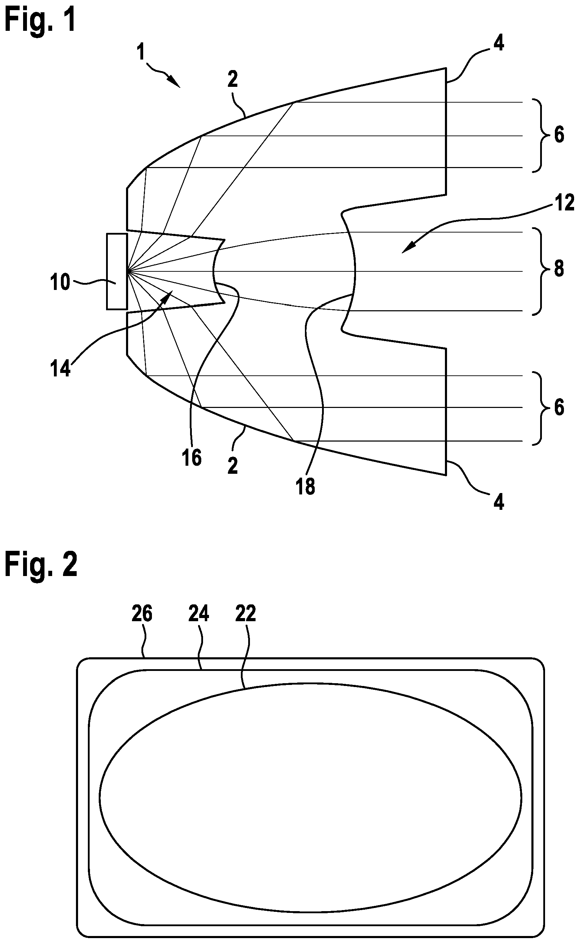

Figur 1 zeigt ein Beispiel eines herkömmlichen Totalreflexions- bzw. TIR (total internal reflection)-Elements, das nicht Gegenstand der Erfindung ist. Bei diesen Optiken wird ausgenutzt, dass ein Lichtstrahl, der aus einem optisch dichteren Medium auf die Grenzfläche zu einem optischen dünneren Medium trifft, aufgrund von optischen Gesetzmäßigkeiten mit einem Brechungswinkel gebrochen wird, der größer ist als der Einfallswinkel. Wenn der Einfallswinkel einen bestimmten Grenzwinkel überschreitet, entsteht daher an der Grenzfläche eine Totalreflexion.

In einem massiv gestalteten TIR-Element 1 wird dabei zunächst Licht von einer Lichtquelle 10 wie etwa einer Leuchtdiode in den Körper des optischen Elements 1 eingekoppelt. Diese Lichtquellen strahlen in viele Richtungen, näherungsweise halbkugelförmig ab. Das TIR-Element ist dann an den relevanten seitlichen Grenzflächen 2 so geformt, dass die seitlich abgestrahlten Lichtstrahlen 6 reflektiert und in eine Vorzugsrichtung gelenkt werden, während die bereits etwa in Vorzugsrichtung ausgestrahlten Lichtstrahlen 8 nicht mehr oder nur noch geringfügig durch das optische Element 1 abgelenkt werden. Die seitlichen Flächen 2 können dabei schräg oder gekrümmt ausgeführt sein, so dass eine becherartige Form entsteht; auch die gesamte Austrittsfläche 4 kann je nach Ausführung plan, annähernd plan oder schräg oder gekrümmt gebildet sein, während in der Mitte des Elements über der Lichtquelle 10 oft eine Ausnehmung 12 im Körper des optischen Elements 1 vorgesehen ist, da das Licht in dieser Richtung im wesentlichen unverändert weiter geleitet werden soll. Je nach Material und Wellenlänge kann aber diese Ausnehmung auch fehlen und der Körper des optischen Elements an dieser Stelle massiv bis zur Austrittsfläche ausgebildet sein, oder auch eine konvexe Wölbung umfassen. Außerdem ist an der Einkoppelseite üblicherweise eine Ausnehmung 14 gebildet, in der die Lichtquelle 10 passend oder mit Abstand eingesetzt werden kann.

So wird ein maximaler Anteil der gesamten erzeugten Lichtstärke im Wesentlichen in die Vorzugsrichtung gelenkt, wobei der erreichte Abstrahlwinkel und der Grad der Kollimation von der genauen Ausgestaltung des optischen Elements abhängig sind. Jedenfalls kann auf diese Weise eine gute Helligkeitsausbeute in einem gewünschten eingegrenzten Beleuchtungsbereich erreicht werden, ohne dabei zu viel Licht an die umgebenden Bereiche zu verlieren. An der Einkopplungsfläche des Lichts sowie an der Austrittsfläche des Lichts können linsenartige Eigenschaften 14, 18 ausgebildet sein, sowie weitere spezielle Ausformungen wie Fresnel-Elemente oder mikroskopische Oberflächengestaltungen vorgesehen sein, um die Strahlformung weiter zu beeinflussen. Der Querschnitt und Beleuchtungsbereich solcher TIR-Elemente ist kreisförmig, so dass auch der Beleuchtungsbereich kreisförmig wird.

Vorteilhafterweise wird ein TIR-Element nun so abgeändert, dass ein länglicher Beleuchtungsbereich mit gleichmäßiger Ausleuchtung erreicht wird. Dazu wird unter Beibehaltung der grundsätzlichen Eigenschaften wie oben beschrieben der Querschnitt des optischen Elements in der Austrittsebene 4 so verändert, dass er nur noch zwei, eine oder keine Symmetrieachsen mehr aufweist. Figur 2 zeigt mehrere alternative Optionen für die Querschnittsfläche. Beispielsweise kann insbesondere ein rechteckiger Querschnitt 26 mit unterschiedlichen Seitenlängen vorgesehen sein, oder ein elliptischer oder annähernd elliptischer Querschnitt 22. Ebenso sind abgerundete Rechtecke 24 denkbar, sogenannte "racetrack"-Querschnitte, oder auch Rechtecke mit angesetzten Halbkreisen (nicht gezeigt). Generell versteht es sich, dass es sich nicht um reine Ellipsen oder Rechtecke handeln muss, sondern Abwandlungen angepasst an den Einsatzbereich möglich sind. Diese Möglichkeiten weisen jeweils zwei Symmetrieachsen im Querschnitt der Austrittsebene auf, in Figur 2 waagrecht und senkrecht verlaufend.

Ebenso sind aber grundsätzlich Querschnitte denkbar, die weniger als zwei Symmetrieachsen aufweisen, z.B. ähnlich wie in Figur 2 gestaltete, die noch eine Spiegelachse aufweisen, aber entlang der zweiten Achse unterschiedlich breit ausgestaltet sind, z.B. mit konstant zunehmender oder abnehmender Breite. Eine gewisse Abweichung von der Symmetrie ist auch bei näherungsweise achsensymmetrisch ausgeführten Elementen grundsätzlich möglich, solange sie die gleichmäßige Ausleuchtung nicht stört. Auch völlig unregelmäßige längliche Elemente, die keine Symmetrieachse mehr im Querschnitt aufweisen, sind möglich, je nach gewünschtem Ausleuchtungsbereich.

Die Höhe und Breite (oder umgekehrt) des Querschnitts solcher optischer Elemente 1 können so bemessen sein, dass die Ausdehnungsverhältnisse zueinander in einem Bereich zwischen 1,05:1 und 4:1 liegen, bevorzugt zwischen 1,1:1 und 3:1, während auch weitere Ausdehnungsverhältnisse wie z.B. 2:1 möglich sind. Wenn beispielsweise eine Kamera mit einem im Format 4:3 ausgestalteten Erfassungsbereich genutzt wird, kann es sinnvoll sein, auch die dafür vorgesehene Beleuchtung auf einen Bereich mit ähnlichem Ausdehnungsverhältnis zu konzentrieren, also etwa zwischen 1,3:1 und 1,5:1.

Die Ausdehnungsverhältnisse können auch in Abhängigkeit von der Anzahl und Anordnung der Lichtquellen in dem optischen Element gestaltet werden. Als Ausdehnungsverhältnis ist bei einem Rechteck oder einer Ellipse die Länge entlang der Symmetrieachsen definiert, also die beiden Seitenlängen des Rechtecks 24, 26 oder die Längen von Hauptachse und Nebenachse der Ellipse 22; bei einem Element mit einer Symmetrieachse soll das Ausdehnungsverhältnis die Längen des Querschnitts entlang der Symmetrieachse und entlang einer dazu senkrechten Achse mit der größten Ausdehnung beschreiben, und bei einem asymmetrischen Element ohne Symmetrieachsen soll das Ausdehnungsverhältnis die Länge entlang der größten Ausdehnung der Fläche und die Breite des Elements senkrecht dazu beschreiben.

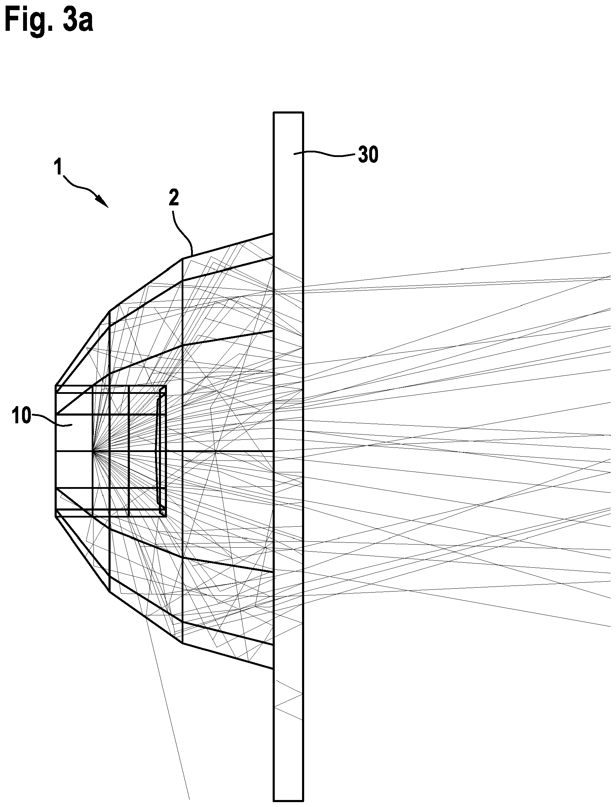

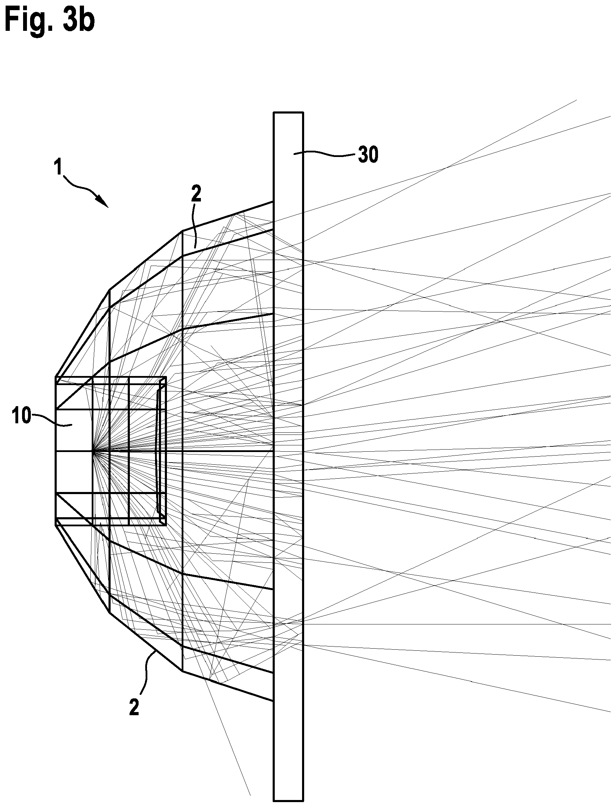

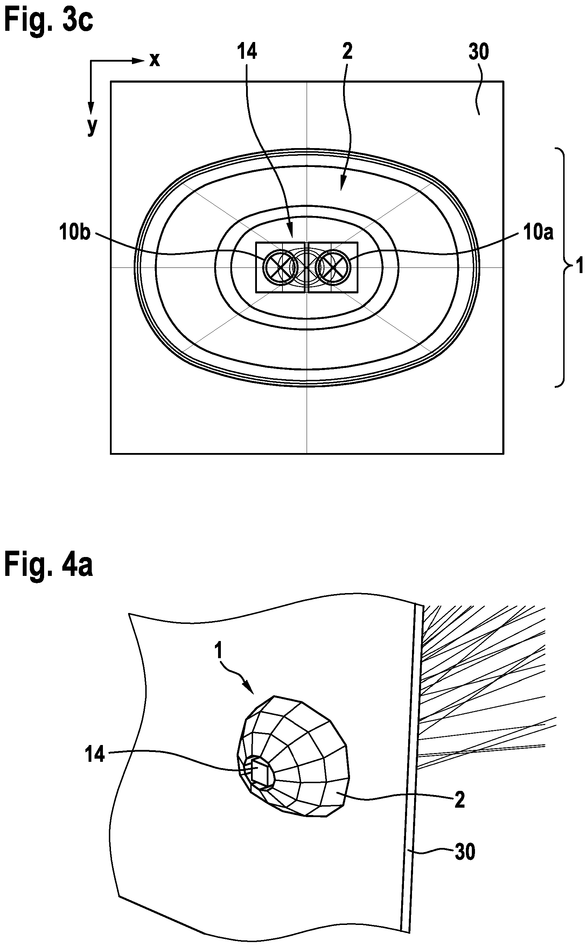

Figur 3 zeigt Querschnitte eines so gestalteten erfindungsgemäßen TIR-Elements mit elliptischer Querschnittfläche in der Austrittsebene. Es wird sichtbar, dass die Lichtstrahlen nicht vollständig kollimiert werden, aber ausreichend in eine Vorzugsrichtung näherungsweise senkrecht zur Austrittsfläche gelenkt werden. In Figur 3a ist eine Simulation des Strahlenverlaufs eines ersten beispielhaften optischen Elements in der X-Z-Ebene gezeigt, während Figur 3b die entsprechende Simulation des Strahlenverlaufs in der Y-Z-Ebene darstellt. Wieder ist in das optische Element 1 eine Lichtquelle 10 eingesetzt, die etwa hemisphärisch abstrahlt, so dass ein Teil der Lichtstrahlen an den Seitenflächen 2 des optischen Elements totalreflektiert wird. Das in den Figuren 3a und 3b simulierte beispielhafte optische Element weist ein Ausdehnungsverhältnis von 1,14:1 auf.

Figur 3c zeigt eine Draufsicht (X-Y-Ebene) auf ein weiteres beispielhaftes optisches Element, hier in einer Ausführung mit einem näherungsweise elliptischen Querschnitt und einem Ausdehnungsverhältnis von 1,48:1. Wie dort sichtbar wird, kann die mittlere Ausnehmung des optischen Elements auf der Einkoppelseite so gestaltet sein, dass sie mehr als eine Lichtquelle bzw. LED aufnehmen kann. So könnten beispielsweise wie gezeigt zwei LEDs 10a und 10b direkt nebeneinander oder in einem bestimmten Abstand angebracht werden, die für eine gleichmäßige Ausleuchtung des gewünschten Bereichs sorgen. Der mittlere Bereich des optischen Elements 1, der über den Lichtquellen 10a, 10b liegt, kann dann eine durchgängige Ausnehmung oder Vertiefung aufweisen, also in dem Bereich, in dem die von den Lichtquellen ausgehenden Lichtstrahlen im wesentlichen unverändert durchtreten sollen. Alternativ könnte je nach Lage der Lichtquellen z.B. noch ein mittlerer Steg gebildet werden, um dafür zu sorgen, dass das Licht beider Lichtquellen möglichst stark parallel gerichtet wird. Auch drei oder noch mehr Lichtquellen können zur Einkopplung von Licht in das optische Element angeordnet sein. Insgesamt wird mit zunehmendem Ausdehnungsverhältnis bevorzugt auch die Anzahl der eingesetzten Lichtquellen steigen. Entsprechend werden nicht nur die Querschnittsfläche der Austrittsebene, sondern auch die dazu parallelen Querschnittsflächen der Ausnehmungen im Bereich der Lichtquellen auf der Einkopplungs- und Austrittseite einen angepassten Querschnitt aufweisen, der ebenfalls ein Ausdehnungsverhältnis größer als 1 aufweisen kann. Der Querschnitt der Ausnehmungen kann in der Form dem Querschnitt der Austrittsfläche entsprechen, wie im Beispiel aus Figur 3c, kann aber auch davon abweichen.

Sämtliche optisch aktiven Flächen des optischen Elements können individuell ausgeformt werden. Beispielsweise kann im Einkopplungsbereich die Einkopplungsfläche als Freiform-Linse ausgebildet sein, die entsprechend an die Bedingungen angepasst wird. Ebenso können die optisch relevanten Flächen wie bereits oben beschrieben mit weiteren Charakteristiken versehen sein, etwa Fresnel-Elementen, Mikrostrukturierungen der Oberfläche oder andere, die die Ein- und Auskopplung von Licht in das bzw. aus dem optischen Element auf die gewünschte Weise erreichen.

Das optische Element kann teilweise oder vollständig aus einem Material gefertigt werden, das in bestimmten Wellenlängenbereichen transparent, in anderen dagegen intransparent ist. Wenn beispielsweise eine Beleuchtung im infraroten Wellenlängenbereich gewünscht ist, könnte ein Material verwendet werden, das im infraroten Bereich transparent ist und im sichtbaren Bereich intransparent, d.h. schwarz erscheinend. So kann das optische Element unauffällig gestaltet und in andere Komponenten integriert werden, da die dahinter liegende beleuchtende LED sowie die versorgende Leiterplatte oder andere Elemente für den Nutzer unsichtbar verdeckt sind. Als Materialien bieten sich beispielsweise Polycarbonate (PC) oder Polymethylmethacrylate (PMMA) an, deren Eigenschaften und Verarbeitungsweise im Fach bekannt ist. Diese Materialien können beispielsweise durch Spritzgießen zu einem erfindungsgemäßen Element verarbeitet werden, was es möglich macht, das optische Element und etwaige weitere Komponenten in einem Schritt integral zu fertigen. Bevorzugt ist für die exakte Ausbildung der optischen Flächen auch das Spritzprägen, bei dem die endgültige Form beim Aushärten unter dem Schließdruck der Form eingeprägt wird. Es ist dabei grundsätzlich auch möglich, einstückig ausgebildete Elemente aus verschiedenen Materialien zu bilden, z.B. durch ein Mehrkomponenten-Spritzgussverfahren.

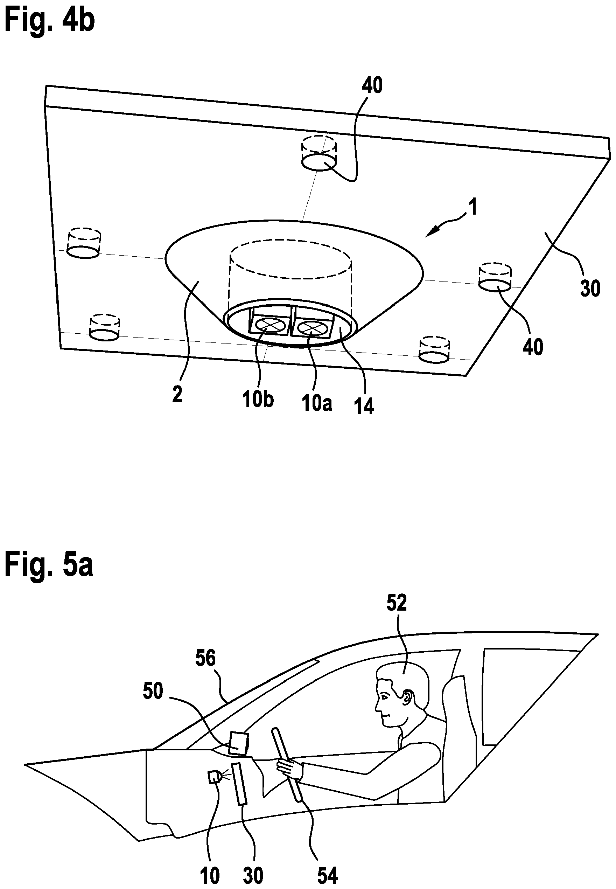

Erfindungsgemäss sind die optischen Elemente integral mit einer Deckscheibe 30 ausgebildet, etwa die Deckscheibe einer Anzeige bzw. eines Gehäuses im Fahrzeugcockpit am Armaturenbrett oder in einer Mittelkonsole, oder an anderen Anzeigebereichen in einem Fahrzeug. Figuren 4a und 4b zeigen solche kombinierten Deckscheibeneinheiten aus optischem Element 1 und Deckscheibe 30 in einer Schrägansicht. Diese Deckscheibe 30 ist bereits in den Figuren 3a bis c gezeigt. Wie dort sichtbar ist, ist die Deckscheibe 30 in der Austrittsebene des optischen Elements 1 angeformt bzw. bildet selbst die Austrittsfläche 4 des optischen Elements 1. Die Deckscheibe 30 weist üblicherweise Abmessungen deutlich über den Querschnitt des optischen Elements 1 hinaus auf, und kann auch weitere Elemente, Öffnungen, Halterungen, Befestigungsabschnitte 40 etc. aufweisen. Auf diese Weise ist es möglich, ein optisches Element sicher und zuverlässig an der richtigen Stelle einzubauen, ohne dass dabei Fehler auftreten können. Außerdem ermöglicht es eine kostengünstige Fertigung der gesamten Deckscheibe mit Optik. Material und Herstellungsverfahren eines optischen Elements mit oder ohne angeformte Deckscheibe gemäß der Erfindung sind abhängig vom Einsatzgebiet wählbar. Aus beiden Figuren 4a und 4b ist ersichtlich, dass sich das optische Element in eine Richtung von der Oberfläche der Deckscheibe weg erstreckt, wobei der grundlegende Aufbau des Körpers des optischen Elements mit seitlichen Reflexionsflächen 2 und einer Aufnahme 14 für eine oder mehrere Lichtquellen 10a, 10b so wie bereits vorstehend beschrieben ist.

Gemäß einer weiteren Ausführungsform sind optische Elemente 1 wie oben beschrieben nutzbar, um eine effiziente Ausleuchtung eines Fahrzeuginnenraums zu erreichen.

Beispielsweise ist in einem Fahrerbeobachtungssystem, bei dem eine Kamera mit einer nicht-quadratischen Detektorfläche verwendet wird (z.B. übliches 4:3-Format), eine gleichmäßige Ausleuchtung des zu erfassenden Bereichs erforderlich. Gleichzeitig soll zur Einsparung von Energie und Komponenten auch kein zu großer Bereich außerhalb der Kameraerfassung unnötig beleuchtet werden. Figur 5a zeigt beispielhaft eine Skizze eines Fahrzeuginnenraums, in dem eine erfindungsgemäße Ausführungsform zur Anwendung kommen kann.

In diesem Ausführungsbeispiel kann daher ein erfindungsgemäßes optisches Element 1 wie oben beschrieben zur Beleuchtung dienen. Die genauen Abmessungen und die exakte Form des dazu notwendigen Querschnitts des optischen Elements sind wieder abhängig von den geometrischen Bedingungen, also unter anderem vom Abstand des Elements 1 zu dem zu beleuchtenden Bereich (d.h. hier zum Fahrer), vom Beleuchtungswinkel, von der Leuchtstärke der verwendeten Leuchtmittel 10, und von der Größe und Form des zu beleuchtenden Bereichs.

Der Fahrer 52 sitzt beispielsweise im Fahrersitz, während unterhalb der Windschutzscheibe 56 hinter dem Lenkrad 54 ein Armaturenbrett bzw. ein Anzeigebereich angeordnet ist. In diesem Bereich kann eine Lichtquelle 10 zur Ausleuchtung des gewünschten Bereichs angeordnet sein, z.B. eine Infrarot-LED, die mit Hilfe des optischen Elements 1, das in der Deckscheibe 30 integriert ist, mindestens den Bereich ausleuchtet, in dem sich üblicherweise der Kopf eines Fahrers befindet. Als Wellenlängenbereich bietet sich für eine solche Anwendung z.B. der nahe Infrarotbereich zwischen etwa 800 und 1.000nm an, es können aber ebenso andere Wellenlängenbereiche verwendet werden. Die Kamera 50 kann ebenfalls im Armaturenbrett an geeigneter Stelle angeordnet sein und das reflektierte und gestreute Licht der LED 10 erfassen, also damit eine Bildgebung z.B. des Fahrerkopfs erhalten. Diese Daten können dann beliebig ausgewertet werden, etwa zur Erfassung der Kopfposition, Blickrichtung, Augenschlusszeiten etc. Optional ist die Deckscheibe 30 mit einem weiteren Abschnitt auch vor der Kamera 50 als Abdeckung angeordnet.

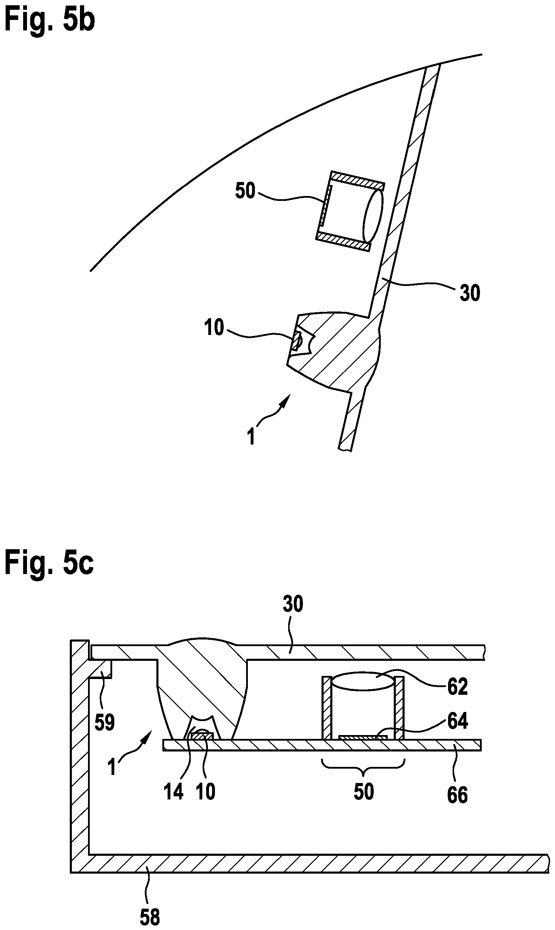

Figur 5b zeigt den Bereich der Lichtquelle 10 detaillierter. Die Kamera 50 ist hier in unmittelbarer Nähe der Lichtquelle 10 gezeigt, kann sich aber grundsätzlich auch an einem anderen geeigneten Ort befinden. Die Lichtquelle 10, also z.B. die zur Beleuchtung dienende LED, ist in ein optisches Element 1 eingebracht, das bevorzugt ein erfindungsgemäßes TIR-Element sein kann. Wie zu sehen ist, ist das optische Element 1 wieder direkt in die Deckscheibe 30 integriert, welche hier auch den Kamerabereich 50 abdeckt. Zur Unterbringung von Beleuchtung 10 und Kamera 50 könnte ein bereits vorhandener Gehäusebereich des Armaturenbretts gewählt werden, indem auch noch weitere Anzeigeelemente oder Komponenten vorgesehen sind, oder es könnte auch ein eigenes Gehäuseelement bzw. ein Gehäuseabschnitt ausgebildet sein, das nur für diese Anwendung vorgesehen ist und mit einer entsprechenden Deckscheibe 30 versehen ist.

Die Deckscheibe 30 muss, wie in der Skizze in Figur 5b angedeutet, nicht unbedingt planar sein; ebenso sind auch gekrümmte Deckscheiben mit konkaver oder konvexer Ausgestaltung denkbar. Außerdem kann die Deckscheibe in einzelnen Bereichen Ausnehmungen oder Anformungen aufweisen. In Figur 5c ist eine Draufsicht des Beleuchtungs-/Kamerabereichs mit einer Deckscheibe 30 in Draufsicht gezeigt. Die Deckscheibe ist geeignet in oder an ein Gehäuse 58 eingesetzt und kann auf beliebige Weise dort befestigt sein, idealerweise auf lösbare Weise, um Komponenten hinter der Deckscheibe 30 zu ersetzen oder zu warten. Für die Anbindung der Deckscheibe kommen alle fachüblichen Möglichkeiten in Frage, wie etwa Klemm- oder Rastverbindungen, Klebeverbindungen, Schrauben und weitere. Entsprechende Halteelemente oder Ausnehmungen können direkt mit der Deckscheibe und/oder dem Gehäuse ausgeformt werden. Im gezeigten Beispiel weist das Gehäuse 58 einen Haltevorsprung 59 auf, an dem die Deckscheibe 30 anliegen kann.

Weiter ist in Figur 5c deutlich das optische Element 1 sichtbar, das einstückig mit der Deckscheibe 30 ausgeführt ist. In der Ausnehmung 14 des optischen Elements ist eine Lichtquelle 10 in Form einer LED angeordnet, die auf einer Platine bzw. Leiterplatte 66 angebracht und kontaktiert ist, so dass sie als Lichtquelle in dem optischen Element 1 dienen kann. Wie bereits oben beschrieben, sollte das integrierte optische Element 1 in seinem Querschnitt und den Abmessungen so ausgelegt sein, dass der gewünschte Bereich möglichst optimal ausgeleuchtet wird, also beispielsweise ein rechteckiger Bereich mit vorgegebenem Ausdehnungsverhältnis.

Ein Kameraelement 50 kann ebenfalls auf derselben Leiterplatte 66 hinter der Deckscheibe 30 angeordnet werden oder alternativ auch als eigenes Element ausgebildet sein. Das Kameraelement 50 umfasst unter anderem ein oder mehrere Objektive 62 zur Abbildung des gewünschten Beobachtungsbereichs, die entsprechend dimensioniert und ausgerichtet sind, sowie einen Kamerasensor 64 wie etwa ein CCD-Element, das im gewünschten Wellenlängenbereich empfindlich ist. Natürlich können auch z.B. andere optische Elemente wie Filterelemente zur Filterung von Umgebungslicht etc. vorhanden sein, und/oder es können mehrere Kameras 50 genutzt werden, die beispielsweise an verschiedenen Orten angebracht sind und so eine Beobachtung aus mehreren Positionen erlauben und optional miteinander kombiniert werden können. Selbstverständlich umfasst das System außerdem weitere geeignete Schaltungselemente, Stromquellen und Verbindungen, die Betrieb und Ansteuerung von Kamera und Lichtquelle ermöglichen und hier nicht gezeigt sind.

Wie hier zu sehen ist, kann die Deckscheibe 30 beispielsweise im Bereich des optischen Elements 1 leicht von ihrer sonstigen Form abweichen; hier ist in Figur 5c eine konvexe Auswölbung zu sehen, die beispielsweise einen Linseneffekt bilden kann, je nach gewünschter Strahlformung. Ebenso könnte die optische Austrittsfläche hier aber völlig gleichförmig mit der sonstigen Oberfläche der Deckscheibe 30 ausgebildet sein, indem die übrigen Dimensionen des optischen Elements angepasst werden. Die Deckscheibe muss auch insgesamt und/oder speziell im Bereich des optischen Elements nicht unbedingt plan oder poliert sein, sondern es sind durch entsprechende Anpassung der optischen Eigenschaften des optischen Elements auch matte Deckscheiben und gekrümmte Deckscheiben möglich.

Während die integrale Ausbildung von Deckscheibe und optischem Element den Vorteil bietet, dass keine gesonderten Elemente zum Einbau und bei der Herstellung notwendig sind und sichergestellt werden kann, dass die Ausrichtung und Anbringung des Beleuchtungselements und optional der Kamera korrekt sind, kann ein erfindungsgemäßes optisches Element gemäß den zuvor beschriebenen Ausführungsformen grundsätzlich auch als modulares Element ausgeführt werden, das dann in eine entsprechende Ausnehmung oder Halterung eingesetzt wird.

Es versteht sich, dass alle beispielhaften Ausführungsformen, die für die detaillierte Auslegung des optischen Elements beschrieben wurden, beliebig mit den Ausführungsformen für die Integration eines optischen Elements in eine Abdeckung bzw. Deckscheibe kombiniert werden kann, insbesondere auch mit den beschriebenen Ausführungsformen zur Fahrerbeobachtung. Ebenso kann aber auch ein weiteres optisches Element auf diese Weise in eine Deckscheibe, insbesondere für eine Fahrzeuganzeige, integriert werden.

## Patentansprüche

1. Deckscheibeneinheit, umfassend eine Deckscheibe (30) mit einer planaren oder gekrümmten Oberfläche und ein einstückig an der Scheibe angeformtes optisches Element (1), wobei die Deckscheibe (30) eine Abdeckung für einen Abschnitt eines Fahrzeugcockpits bildet, **dadurch gekennzeichnet dass** das optische Element (1) so ausgebildet ist, dass ein Teil der von mindestens einer Lichtquelle (10) in das optische Element eingestrahlten Lichtstrahlen durch Totalreflexion an einer Grenzfläche (2) innerhalb des optischen Elements reflektiert wird und dann in einer Austrittsebene (4) aus dem optischen Element in eine Vorzugsrichtung austritt, und der Querschnitt (22, 24, 26) des optischen Elements in der Austrittsebene (4) zwei oder weniger Symmetrieachsen aufweist.

2. Deckscheibeneinheit nach Anspruch 1, wobei der Querschnitt des optischen Elements in der Austrittsebene eines der folgenden ist: eine Ellipse (22), ein Rechteck (24), ein abgerundetes Rechteck (26).

3. Deckscheibeneinheit nach Anspruch 1 oder 2, wobei der Querschnitt (22, 24, 26) des optischen Elements in der Austrittsebene ein Ausdehnungsverhältnis zwischen 1,05:1 und 4:1 aufweist, bevorzugt zwischen 1,1:1 und 3:1.

4. Deckscheibeneinheit nach einem der vorhergehenden Ansprüche, das aus einem Material gefertigt ist, das im sichtbaren Bereich zumindest teilweise intransparent ist und im infraroten Bereich transparent ist.

5. Deckscheibeneinheit nach einem der vorhergehenden Ansprüche, das durch Spritzgießen oder Spritzprägen gefertigt ist.

6. Deckscheibeneinheit nach einem der vorhergehenden Ansprüche, das ein oder mehrere Einkopplungsbereiche (14) umfasst, die so ausgebildet sind, dass mindestens zwei separate Lichtquellen (10a, 10b) zur Einkopplung von Licht in das optische Element (1) verwendbar sind.

7. Deckscheibeneinheit nach einem der vorhergehenden Ansprüche, wobei die Deckscheibe (30) mit dem optischen Element (1) durch Spritzgießen oder Spritzprägen gefertigt ist.

8. Fahrerbeobachtungssystem, umfassend:
eine Deckscheibeneinheit nach einem der vorhergehenden Ansprüche,
mindestens eine Lichtquelle (10), die Infrarotlicht in das optische Element der Deckscheibe einstrahlt;
und eine Kamera (50), die Infrarotlicht, das aus einem von dem optischen Element beleuchteten Bereich reflektiert und/oder gestreut wird, erfasst,
wobei das Fahrerbeobachtungssystem in einem Fahrzeugcockpit angeordnet ist.

9. Fahrerbeobachtungssystem nach Anspruch 8, wobei die Kamera (50) hinter der Deckscheibe (30) der Deckscheibeneinheit angeordnet ist.

## Claims

1. Cover pane unit comprising a cover pane (30) having a planar or curved surface and an optical element (1) formed onto the pane in one piece, wherein the cover pane (30) forms a cover for a portion of a vehicle cockpit, **characterized in that** the optical element (1) is designed such that some of the light rays radiated into the optical element by at least one light source (10) are reflected at an interface (2) within the optical element by total-internal reflection and then emerge from the optical element in a preferred direction in an exit plane (4),
and the cross section (22, 24, 26) of the optical element in the exit plane (4) has two axes of symmetry or fewer.

2. Cover pane unit according to Claim 1, wherein the cross section of the optical element in the exit plane is one of the following: an ellipse (22), a rectangle (24), a rounded rectangle (26).

3. Cover pane unit according to Claim 1 or 2, wherein the cross section (22, 24, 26) of the optical element in the exit plane has an aspect ratio of between 1.05:1 and 4:1, preferably between 1.1:1 and 3:1.

4. Cover pane unit according to any of the preceding claims, manufactured from a material that is at least partially opaque in the visible range and transparent in the infrared range.

5. Cover pane unit according to any of the preceding claims, manufactured by injection moulding or injection compression moulding.

6. Cover pane unit according to any of the preceding claims, comprising one or more incoupling regions (14) designed such that at least two separate light sources (10a, 10b) can be used for coupling light into the optical element (1).

7. Cover pane unit according to any of the preceding claims, wherein the cover pane (30) with the optical element (1) is manufactured by injection moulding or injection compression moulding.

8. Driver observation system, comprising:
a cover pane unit according to any of the preceding claims, at least one light source (10) that radiates infrared light into the optical element of the cover pane;
and a camera (50) capturing infrared light reflected and/or scattered from a region illuminated by the optical element, wherein the driver observation system is arranged in a vehicle cockpit.

9. Driver observation system according to Claim 8, wherein the camera (50) is arranged behind the cover pane (30) of the cover pane unit.

## Revendications

1. Unité de plaque de couverture, comprenant une plaque de couverture (30) ayant une surface plane ou incurvée et un élément optique (1) formé d'un seul tenant sur la plaque, la plaque de couverture (30) formant une couverture pour une partie d'un cockpit de véhicule, **caractérisée en ce que** l'élément optique (1) est conçu de sorte qu'une partie des rayons lumineux, rayonnés depuis au moins une source de lumière (10) dans l'élément optique, est réfléchie par réflexion totale au niveau d'une surface limite (2) à l'intérieur de l'élément optique, puis sort de l'élément optique, dans un plan de sortie (4), selon une direction préférentielle,
et la section transversale (22, 24, 26) de l'élément optique dans le plan de sortie (4) présente deux axes de symétrie ou moins.

2. Unité de plaque de couverture selon la revendication 1, dans laquelle la section transversale de l'élément optique dans le plan de sortie est l'une des suivantes : une ellipse (22), un rectangle (24), un rectangle arrondi (26).

3. Unité de plaque de couverture selon la revendication 1 ou 2, dans laquelle la section transversale (22, 24, 26) de l'élément optique dans le plan de sortie présente un rapport d'expansion compris entre 1,05:1 et 4:1, de préférence entre 1,1:1 et 3:1.

4. Unité de plaque de couverture selon l'une quelconque des revendications précédentes, qui est fabriquée dans un matériau qui est au moins partiellement opaque dans le domaine visible et transparent dans le domaine infrarouge.

5. Unité de plaque de couverture selon l'une quelconque des revendications précédentes, qui est fabriquée par moulage par injection ou par injection-compression.

6. Unité de plaque de couverture selon l'une quelconque des revendications précédentes, qui comprend une ou plusieurs zones d'injection (14) qui sont conçues de sorte qu'au moins deux sources de lumière distinctes (10a, 10b) peuvent être utilisées pour injecter de la lumière dans l'élément optique (1).

7. Unité de plaque de couverture selon l'une quelconque des revendications précédentes, dans laquelle la plaque de couverture (30) dotée de l'élément optique (1) est fabriquée par moulage par injection ou par injection-compression.

8. Système d'observation du conducteur, comprenant :
une unité de plaque de couverture selon l'une quelconque des revendications précédentes, au moins une source de lumière (10) qui rayonne une lumière infrarouge dans l'élément optique de la plaque de couverture ;
et une caméra (50) qui capture la lumière infrarouge réfléchie et/ou diffusée par une zone éclairée par l'élément optique, le système d'observation du conducteur étant disposé dans un cockpit de véhicule.

9. Système d'observation du conducteur selon la revendication 8, dans lequel la caméra (50) est disposée derrière la plaque de couverture (30) de l'unité de plaque de couverture.
